(19) Europäisches Patentamt
European Patent Office
Office européen des brevets

(11) **EP 4 053 589 B1**

(12) **EUROPEAN PATENT SPECIFICATION**

(45) Date of publication and mention of the grant of the patent:
**28.06.2023   Bulletin 2023/26**

(21) Application number: **22159785.9**

(22) Date of filing: **02.03.2022**

(51) International Patent Classification (IPC):
**G01S 7/481** (2006.01)   **G01S 7/497** (2006.01)
**G01J 3/02** (2006.01)   **G02B 27/48** (2006.01)
**G06T 5/00** (2006.01)   **H04N 13/254** (2018.01)

(52) Cooperative Patent Classification (CPC):
**G01S 7/497; G01S 7/4813**

(54) **ELECTRO-OPTICAL DISTANCE METER AND METHOD FOR CALCULATING OPTICAL NOISE SIGNAL**

ELEKTRO-OPTISCHER ENTFERNUNGSMESSER UND VERFAHREN ZUR BERECHNUNG DES OPTISCHEN RAUSCHSIGNALS

COMPTEUR DE DISTANCE ELECTRO-OPTIQUE ET PROCEDE DE CALCUL D'UN SIGNAL DE BRUIT OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **05.03.2021   JP 2021035056**

(43) Date of publication of application:
**07.09.2022   Bulletin 2022/36**

(73) Proprietor: **TOPCON CORPORATION**
**Tokyo 174-8580 (JP)**

(72) Inventors:
• **AOKI, Yasutoshi**
**Itabashi-ku, 174-8580 (JP)**
• **ABE, Jun**
**Itabashi-ku, 174-8580 (JP)**
• **OHASHI, Yuichi**
**Itabashi-ku, 174-8580 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
JP-A- 2014 149 171     US-A1- 2018 226 773
US-A1- 2019 113 606     US-A1- 2019 120 944

EP 4 053 589 B1

**Description**

Technical Field

The present invention relates to an electro-optical distance meter, and more specifically, to an electro-optical distance meter that measures a distance to a target by emitting distance-measuring light to the target and receiving the distance-measuring light reflected by the target, and a method for calculating an optical noise signal of the electro-optical distance meter.

Background Art

An electro-optical distance meter that measures a distance to a target by emitting distance-measuring light to the target and receiving the distance-measuring light reflected by the target, as disclosed in Patent Literature 1 has been known.

In the electro-optical distance meter, in some cases, a reference signal and noise generated from various electronic circuits enter a circuit of a light receiving unit side due to electrostatic coupling, electromagnetic coupling, and electromagnetic radiation, etc., without reciprocating to a target, and cause electrical noise, and as a result, an error occurs in a distance value. In the electro-optical distance meter of Patent Literature 1, before a distance measurement, (1) in a state where a diaphragm just before a light receiving element is narrowed most, (2) a light source is caused to emit light, and (3) a multiplication factor of the light receiving element is controlled to a proper value, noise is measured, and an amplitude and an initial phase of the noise are obtained and stored in a storage unit, and at the time of the distance measurement, based on these amplitude and initial phase, a distance from which an error caused by the noise has been removed is calculated (refer to Paragraph [0045]). This can reduce errors without devising components and wirings.

Citation List

Patent Literatures

Patent Literature 1 JP2009-258006A

Patent Literature 2 JP2010-032421A

Patent Litterature JP 2014 149171 describes an optical ranging device with condensing objective lens system, the reflection detected as noise by an objective lens does not enter the ranging device and is eliminated.

Summary of Invention

Technical Problem

However, noise that causes an error in a distance value in an electro-optical distance meter includes not only electrical noise but also optical noise caused by the distance-measuring light being reflected by the inside of the electro-optical distance meter to enter into the light receiving element. In the electro-optical distance meter disclosed in Patent Literature 1, optical noise reduction is not considered.

The present invention has been made in view of these circumstances, and an object thereof is to provide an electro-optical distance meter in which an error in a distance value caused by noise is further reduced without specially devising components and wirings.

Solution to Problem

In order to achieve the object described above, an electro-optical distance meter according to an aspect of the present invention includes a first light source configured to emit distance-measuring light toward a measuring object, a first light receiving unit including a first light receiving element configured to receive the distance-measuring light reflected by the measuring object and convert the distance-measuring light into a distance-measuring signal, and a first received light amount adjusting means configured to adjust a light amount entering the first light receiving element, a first objective lens configured to condense the reflected distance-measuring light to the first light receiving unit, a first arithmetic control unit configured to calculate a distance to the measuring object from an initial phase of the distance-measuring signal, and a first storage unit configured to store the distance-measuring signal, distance value data, and an optical noise signal, and configured to measure an electrical noise signal by putting the first received light amount adjusting means into a state where the first received light amount adjusting means completely blocks light and causing the first light source to emit light, measure a distance-measuring signal of the measuring object by putting the first received light amount adjusting means into a proper state, and calculate a distance by subtracting the electrical noise signal and the optical noise signal from the distance-measuring signal, wherein the first arithmetic control unit measures a first noise signal by putting the first received light amount adjusting means into a state where the first received light amount adjusting means completely blocks light and causing the first light source to emit light with a noise measuring jig having a unique jig-derived noise signal attached, the noise measuring jig being attachable to and detachable from the electro-optical distance meter and configured to remove reflected distance-measuring light entering the first light receiving unit when attached, measures a second noise signal by putting the first received light amount adjusting means into a state where the first received light amount adjusting means transmits light most and causing the first light source to emit light in a state where the noise measuring jig is attached, and calculates the optical noise signal by subtracting the first noise signal and the j ig-derived noise stores the optical noise signal from the second noise signal, and in the storage unit.

In the aspect described above, it is also preferable that, the jig-derived noise signal is obtained by, by using a second electro-optical distance meter including a second light source configured to emit distance-measuring light toward a measuring object, a second light receiving unit including a second light receiving element configured to receive the distance-measuring light reflected by the measuring object and convert the distance-measuring light into a distance-measuring signal, and a second received light amount adjusting means configured to adjust a light amount entering the second light receiving element, a second obj ective lens configured to condense the reflected distance-measuring light to the second light receiving unit, a second arithmetic control unit configured to calculate a distance to the measuring object based on the distance-measuring signal, and a second storage unit, in a state where collimation to a night sky is performed, measuring a third noise signal by putting the second received light amount adjusting means into a state where the second received light amount adjusting means completely blocks light and causing the second light source to emit light, measuring a fourth noise signal by putting the second received light amount adjusting means into a state where the second received light amount adjusting means transmits light most and causing the second light source to emit light, and calculating an optical noise signal unique to the second electro-optical distance meter by subtracting the third noise signal from the fourth noise signal, measuring a fifth measurement noise signal by putting the second received light amount adjusting means into a state where the second received light amount adjusting means completely blocks light and causing the second light source to emit light in a state where the noise measuring jig is attached, measuring a sixth measurement noise signal by putting the second received light amount adjusting means into a state where the second received light amount adjusting means transmits light most in a state where the noise measuring jig is attached, and subtracting the fifth measurement noise signal and the unique optical noise signal from the sixth measurement noise signal.

In the aspect described above, it is also preferable that the noise measuring jig includes a bottomed cylindrical housing, a glass filter configured to absorb light of a wavelength of the distance-measuring light, and a laser light absorber configured to absorb the distance-measuring light reflected by the glass filter, and the glass filter is installed so that distance-measuring light emitted through the first or second objective lens in an attached state of the noise measuring jig enters the glass filter at a Brewster's angle.

A method for calculating an optical noise according to another aspect of the present invention, uses an electro-optical distance meter including a light source configured to emit distance-measuring light toward a measuring object, a light receiving unit including a light receiving element configured to receive the distance-measuring light reflected by the measuring object and convert the distance-measuring light into a distance-measuring signal, and a received light amount adjusting means configured to adjust a light amount entering the light receiving element, a storage unit configured to store an optical noise signal, and an arithmetic control unit configured to calculate a distance to the measuring object based on the distance-measuring signal, and a noise measuring jig having a unique jig-derived noise signal, attachable to and detachable from the electro-optical distance meter, and configured to remove reflected distance-measuring light entering the light receiving unit when attached, and includes measuring a first noise signal by putting the received light amount adjusting means into a state where the received light amount adjusting means completely blocks light and causing the light source to emit light with the noise measuring jig attached, measuring a second noise signal by putting the received light amount adjusting means into a state where the received light amount adjusting means transmits light most and causing the light source to emit light with the noise measuring jig attached, calculating the optical noise signal by subtracting the first noise signal and the j ig-derived noise signal from the second noise signal, measuring an electrical noise signal by putting the received light amount adjusting means into a state where the received light amount adjusting means completely blocks light and causing the light source to emit light, and calculating the distance by subtracting the electrical noise signal and the optical noise signal from the distance-measuring signal of the measuring object measured by putting the received light amount adjusting means into a proper state.

Herein, " true distance-measuring signal " refers to the signal component obtained by removing noise signals from measured distance-measuring signal.

Benefit of Invention

According to the aspects described above, an electro-optical distance meter in which an error in a distance value caused by noise is further reduced without specially devising components and wirings can be provided.

Brief Description of Drawings

FIG. 1 is a block diagram of an electro-optical distance meter according to an embodiment of the present invention.

FIG. 2 is a view illustrating an example of a received light amount adjusting means of the electro-optical distance meter.

FIG. 3A is a diagram illustrating sampling data of a distance-measuring signal of the electro-optical distance meter, and FIG. 3B is a diagram illustrating synchronous addition data of the distance-measuring signal.

FIG. 4 is a diagram illustrating a relationship among distance signal vectors and noise signal vectors in the electro-optical distance meter.

FIGS. 5A and 5B are views describing examples of noise measurement methods in the electro-optical distance meter, FIG. 5A describes a method for measuring an electrical noise signal, and FIG. 5B describes a method for measuring an optical noise signal.

FIG. 6 is a diagram describing a method for calculating an average amplitude and an initial phase of an optical noise signal, and an initial phase of a true distance-measuring signal in the electro-optical distance meter.

FIG. 7 is a longitudinal sectional view of an example of a noise measuring jig to be used by being attached to the electro-optical distance meter.

FIGS. 8A and 8B are views describing noise measuring methods using the noise measuring jig in the electro-optical distance meter.

FIG. 9 is a view illustrating relationships of a noise signal measured by using the noise measuring jig with an optical noise signal and an electrical noise signal.

FIG. 10 is a flowchart when measuring an optical noise signal in the electro-optical distance meter.

FIG. 11 is a flowchart of processing when measuring a distance in the electro-optical distance meter.

FIG. 12 is a flowchart of steps for measuring a jig-derived noise of a noise measuring jig by using another electro-optical distance meter.

Description of Embodiments

Hereinafter, preferred embodiments of the present invention will be described with reference to the drawings, however, the present invention is not limited to these. In each embodiment, the same components are provided with the same reference sign, and overlapping description will be omitted.

Embodiments

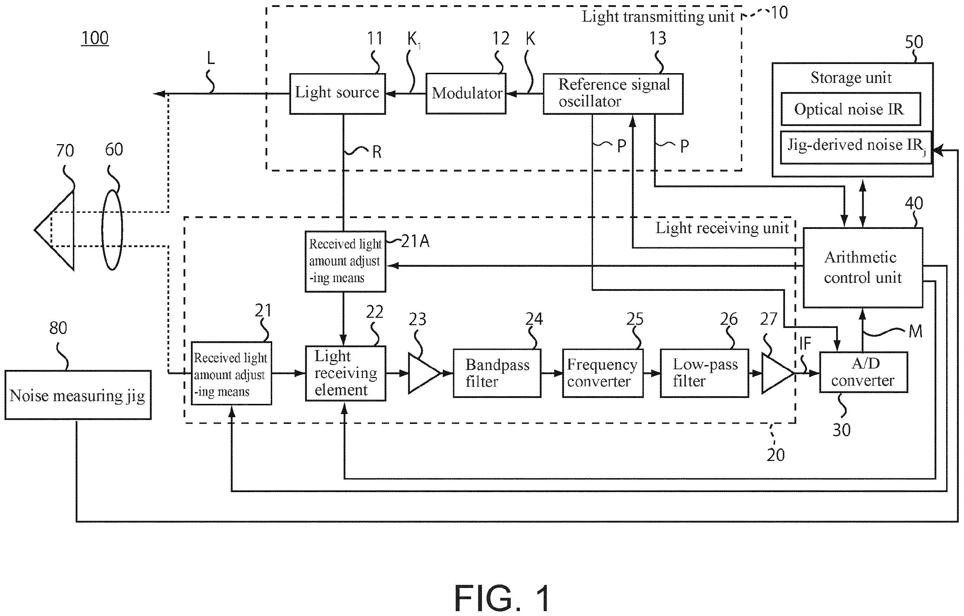

An electro-optical distance meter 100 according to the present embodiment is a so-called phase difference system electro-optical distance meter. As illustrated in FIG. 1, generally, the electro-optical distance meter includes a light transmitting unit 10, a light receiving unit 20, an A/D (Analog/Digital) converter 30, an arithmetic control unit 40, a storage unit 50, and an objective lens 60, and these are housed in a housing configured like a telescope.

The light transmitting unit 10 includes a light source 11, a light transmitting optical system (not illustrated), a modulator 12, and a reference signal oscillator 13. The light source 11 is, for example, a light emitting element such as a laser diode, and emits distance-measuring light L along a collimation axis toward a target 70 such as a prism placed on a survey point through the light transmitting optical system and an objective lens. The light source 11 is connected to the modulator 12, and the modulator 12 is connected to the reference signal oscillator 13. The reference signal oscillator 13 generates a reference signal K with a constant frequency. The modulator 12 modulates the reference signal K to a modulated signal Kl.

The light receiving unit 20 includes a light receiving optical system (not illustrated), received light amount adjusting means 21, 21A, a light receiving element 22, a high frequency amplifier 23, a bandpass filter 24, a frequency converter 25, and a low-pass filter 26.

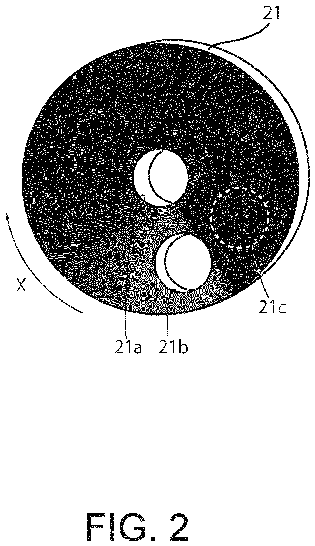

The received light amount adjusting means 21 is arranged just before the light receiving element 22 and adjusts an amount of light entering the light receiving element. The received light amount adjusting means 21 is, for example, a variable density filter composed of a thin discoid film as illustrated in FIG. 2.

The received light amount adjusting means 21 in FIG. 2 has a central hole 21a at a central portion, and has an opening 21b around the central hole 21a, and is formed so that a filter density continuously increases from 0% to 100% in terms of light intensity decay rate in the circumferential direction represented by arrow X in FIG. 2 from the opening 21b toward the other end portion region 21c in the circumferential direction. The received light amount adjusting means 21 is rotated by a rotary shaft (not illustrated) of a motor inserted through the central hole 21a.

The received light amount adjusting means 21 is configured so that the light intensity decay rate is 0% (a state where light is transmitted most) when the opening 21b is at a position matching the light receiving element 22, and the light intensity decay rate reaches 100% (a state where light is blocked most) when the other end portion region 21c reaches a position matching the light receiving element 22. Opening and closing of the received light amount adjusting means 21 (filter) are controlled by controlling motor rotation by the arithmetic control unit 40.

The received light amount adjusting means 21 is not limited to the above-described variable density filter, and a publicly known diaphragm to be used for an electro-optical distance meter can be used.

The light receiving element 22 is, for example, an avalanche photodiode (APD), etc. A bias voltage to be applied to the light receiving element 22 can be controlled by a reverse voltage control unit not illustrated. The reverse voltage control unit changes the bias voltage according to a command from the arithmetic control unit 40 to control the light receiving element 22 to a proper multiplication factor according to a surrounding brightness. The light receiving element 22 receives distance-measuring light L reflected by the target 70 through the light receiving optical system and the received light amount adjusting means 21, and converts the received distance-measuring light into a distance-measuring signal as an electric signal.

This electric signal is amplified by the high-frequency amplifier 23, and then, noise is removed from the signal by the bandpass filter 24.

The frequency converter 25 includes a mixer and a local oscillator. By inputting a local oscillation signal generated by the local oscillator and the distance-measuring signal from which noise has been removed into the mixer and multiplying these, the frequency converter generates a frequency component as a difference in frequency between the signals and a frequency component as a sum of the frequencies of the signals. Here, only the distance-measuring signal converted into an intermediate frequency IF as a difference in frequency between the signals is sorted out by the low-pass filter 26.

The distance-measuring signal converted into the intermediate frequency IF is amplified by an intermediate frequency amplifier 27. The amplified distance-measuring signal is converted into a digital signal by the A/D converter 30, and stored in the storage unit 50 through the arithmetic control unit 40. In the following description, a distance-measuring signal that has been converted into an intermediate frequency IF and converted into a digital signal is referred to as a distance-measuring signal M.

The arithmetic control unit 40 is a processing device that realizes processing to calculate a distance based on a distance-measuring signal M obtained by performing a distance measurement by controlling the light transmitting unit 10 and the light receiving unit 20. As the arithmetic control unit 40, for example, at least one processor, such as a CPU (Central Processing Unit), etc., can be applied. The function of the arithmetic control unit 40 described hereinafter can be realized by a program or a circuit, or a combination of these. When the function is realized by a program, the function is realized by reading out the program stored in the storage unit 50 into a main memory and executing the program.

In addition, the arithmetic control unit 40 obtains a true distance-measuring signal $M_T$ by removing an optical noise signal IR and an electrical noise signal EL described later from the measured distance-measuring signal M, and calculates a distance value based on an initial phase $\beta_T$ of the true distance-measuring signal $M_T$.

The storage unit 50 is composed of a recording medium that stores, saves, and transmits information in a computer-processable format, and includes a so-called main memory and auxiliary storage device. The storage unit 50 stores sampling data and calculated distance value data. In addition, the storage unit 50 stores an average amplitude $a_{IR}$ and an initial phase $\eta_{IR}$ of the optical noise signal IR. Also, the storage unit 50 stores programs for realizing functions of the arithmetic control unit 40 and the electro-optical distance meter 100. As the storage unit 50, for example, a nonvolatile memory such as a flash memory or a ROM (Read Only Memory), a volatile memory such as a RAM (Random Access Memory), etc., can be applied.

Although not illustrated in the drawings, the electro-optical distance meter 100 includes, as user interfaces, an input unit such as button keys and a display unit such as a liquid crystal display. In addition, although not illustrated in the drawings, the electro-optical distance meter 100 includes an external interface, for example, a communication unit, a USB port, etc., that enables external input and output of data stored in the storage unit 50 and data to be arithmetically processed in the arithmetic control unit 40.

(Calculation of Theoretical Distance)

First, measurement of a theoretical distance by the electro-optical distance meter 100 will be described. When the electro-optical distance meter 100 performs a distance measurement, the reference signal oscillator 13 transmits a synchronization signal P to the arithmetic control unit 40 and the A/D converter 30, and transmits a reference signal K to the modulator. The A/D converter performs sampling synchronized with the reference signal K. During the distance measurement, a light amount to be transmitted through the received light amount adjusting means 21 is fixed.

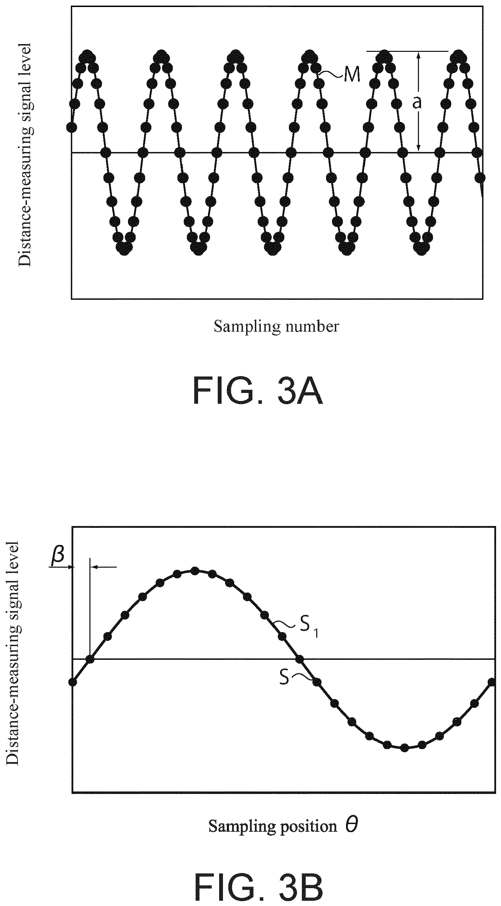

FIG. 3A illustrates sampling of a digitized distance-measuring signal M by the electro-optical distance meter 100. A sampling timing of the A/D converter 30 is determined so that one period of the distance-measuring signal M is always sampled at constant phase angle positions, for example, one period is divided equally into a ($a \geq 3$). At these sampling timings, the distance-measuring signal M is successively sampled over multiple periods of thousands of periods or more. At this time, sampling data of the distance-measuring signal M exceeding an input range of the A/D converter 30 or much smaller than the input range is discarded.

In order to store the sampling data in the storage unit 50, a storage area of the storage unit 50 corresponding to N data of one period of the distance-measuring signal M is prepared, and N sampling data at the same phase position are synchronously added and stored. In this way, as illustrated in FIG. 3B, synthetic data S of the distance-measuring signal M of one period with a large amplitude obtained by synchronously adding sampling data at the same phase positions is created. This synthetic data S is applied to a synthetic sine wave $S_1$ by the method of least squares, and an initial phase $\beta$ of this synthetic sine wave $S_1$ is obtained. This synthetic sine wave $S_1$ can also be expressed by the following expression:

$$\text{Nasin } (\theta-\beta) + \text{Nb} \quad \text{(Expression 1)}$$

(Here, N is the number of distance-measuring signals M added, a is an average amplitude of the distance-measuring signal M, b is a bias level, $\theta$ is coordinates regulating an angle corresponding to a sampling position, and $\beta$ is an initial phase.)

The initial phase $\beta$ is equal to a phase difference between a signal obtained by dividing the frequency of the reference signal K to the same frequency as that of the intermediate frequency signal and the distance-measuring signal M. Based on this initial phase $\beta$, a distance D to the target 70 is calculated according to Expression 2.

$$D = (\beta/2\pi)(c/F)(1/2) = (\beta c)/(4\pi F) \quad \text{(Expression 2)}$$

(Here, $\beta$ is an initial phase, c is light speed, and F is a modulation frequency of the distance-measuring light L.)

It is also possible that, from the light source 11, the distance-measuring light L is used as reference light R and caused to pass through the received light amount adjusting means 21A having the same configuration as that of the received light amount adjusting means 21 through the inside of the electro-optical distance meter 100, and guided to the light receiving element 22. At the time of a distance measurement, a measurement value is corrected by a publicly known method based on a result of measurement using the reference light R.

(Calculation of Actual Distance)

However, an actually measured distance-measuring signal includes noise. Noise occurring during a distance measurement includes a reference signal, an electrical noise signal EL generated from various electronic circuits, and an optical noise signal IR generated when a distance-measuring light L emitted from the light source 11 is reflected by the inside of the instrument such as an objective lens and unintentionally enters the light receiving element 22.

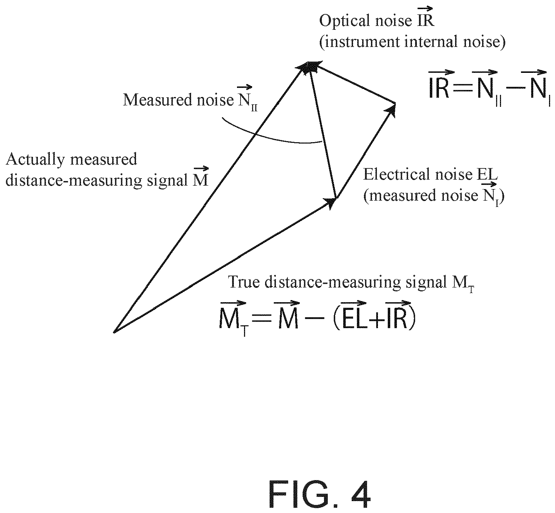

FIG. 4 is a diagram illustrating a relationship among a true distance-measuring signal $M_T$, an actually measured distance-measuring signal M, an optical noise signal IR, and an electrical noise signal EL. As shown in Expression 3, the true distance-measuring signal $M_T$ can be obtained by subtracting the optical noise signal IR and the electrical noise signal EL from the actually measured distance-measuring signal M.

[Numerical Formula 1]

$$\overrightarrow{M_T} = \vec{M} - \left(\overrightarrow{IR} + \overrightarrow{EL}\right) \qquad (\text{Expression } 3)$$

So, a method for measuring these optical noise signal IR and electrical noise signal EL will be described.

(Method for Measuring Noise)

An electrical noise signal EL can be measured by activating the electro-optical distance meter 100 under, for example, the following condition I.

[Condition I]

(1) The received light amount adjusting means 21 is put into a state where it completely blocks light (transmittance: 0%),
(2) the light source 11 is caused to emit light, and
(3) the bias voltage to be applied to the light receiving element is controlled to an optimum value (that is, a multiplication factor is set to an optimum value).

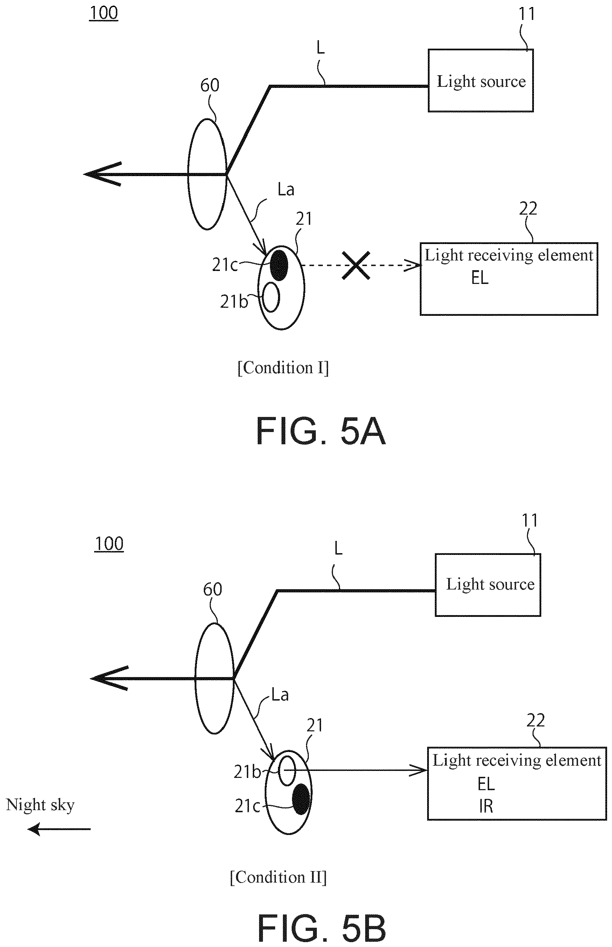

FIG. 5A schematically illustrates a method for measuring electrical noise. When the distance-measuring light L is emitted under the condition I, the distance-measuring light L is emitted through the light transmitting optical system and the objective lens 60. At this time, even when there is reflected distance-measuring light that enters through the objective lens 60 or light La reflected by the inside of the instrument such as the back surface of the objective lens 60, these are blocked by the received light amount adjusting means 21 and do not enter the light receiving element 22, and no signal of incident light is generated. However, the reference signal generated by the reference signal oscillator and other noise generated from various electronic circuits enter circuits after the light receiving element 22 and generate an electrical noise signal EL. Therefore, a measurement noise signal $N_I$ measured under the condition I is an electrical noise signal EL.

On the other hand, an optical noise signal IR can be measured, for example, as follows. For example, a condition (0) is met. The Condition (0) is that a collimation direction of the electro-optical distance meter 100 is set toward the night sky without obstacles, that is, reflected light of the distance-measuring light L does not enter the objective lens 60. Then, under the condition II, the electro-optical distance meter 100 is activated to measure the signal.

[Condition II]

(1a) The received light amount adjusting means 21 is put into a state where it transmits light most (transmittance: 100%),

(2) the light source 11 is caused to emit light, and

(3) the bias voltage to be applied to the light receiving element 22 is set to an optimum value (that is, a multiplication factor is set to an optimum value).

FIG. 5B schematically illustrates a method for measuring an optical noise signal IR. Under the condition (0), the distance-measuring light L emitted from the light source 11 in the condition II is output toward the night sky without obstacles through the objective lens 60. In the direction toward the night sky, no obstacle that reflects the distance-measuring light L is present, so that the distance-measuring light L is not reflected, and no reflected distance-measuring light enters the objective lens 60. However, a part La of the distance-measuring light L is reflected by the inside of the instrument such as the back surface of the objective lens 60 and advances through the light receiving optical system, and is transmitted through the received light amount adjusting means 21to enter the light receiving element 22. Due to the incident light La, an optical noise signal IR is generated. At this time, in the light receiving element 22, an electrical noise signal EL generated from electronic circuits, etc., is also detected.

As illustrated in FIG. 4, a measurement noise signal $N_{II}$ measured under the condition II has a synthetic vector of the optical noise signal IR and the electrical noise signal EL generated simultaneously. Therefore, the optical noise signal IR is obtained by vectorially subtracting, from the measurement noise signal $N_{II}$ measured under the condition II, the measurement noise signal $N_I$, that is, the electrical noise signal EL, measured in the condition I under the same condition (0).

(Method for Calculating Distance Value)

Hereinafter, a method for calculating a distance value according to the present embodiment will be described. Measurement noise signals $N_I$ and $N_{II}$ measured under the condition I and the condition II exhibit the same behavior as the distance-measuring signal M illustrated in FIG. 3A. Therefore, when synthetic data and synthetic sine wave of the measurement noise signals $N_I$ and $N_{II}$ are obtained in the same manner as in the case where synthetic data S and synthetic sine wave $S_1$ of the distance-measuring signal M illustrated in FIG. 3B are obtained, a synthetic sine wave of the noise signals is expressed by the general expression of Expression 4:

$$Na \cdot \sin(\theta - \eta) + Nb \quad \text{(Expression 4)}$$

(Here, N is the number of noise waves added, a is an average amplitude of noise, b is a bias level, $\eta$ is an initial phase, and $\theta$ is coordinates regulating an angle corresponding to a sampling position.)

Therefore, one wave of the measurement noise signal $N_I$ measured by activating the electro-optical distance meter 100 under the condition I is expressed by the following Expression 5:

$$a_I \cdot \sin(\theta - \eta_I) + b_I \quad \text{(Expression 5)}$$

(Here, $a_I$ is an average amplitude of the measurement noise signal $N_I$, $\eta_I$ is an initial phase of the measurement noise signal, and $b_I$ is a bias level.)

One wave of a measurement noise signal $N_{II}$ measured by activating the electro-optical distance meter 100 under the condition II can be expressed by the following expression 6:

$$a_{II} \cdot \sin(\theta - \eta_{II}) + b_{II} \quad \text{(Expression 6)}$$

(Here, $a_{II}$ is an average amplitude of the measurement noise signal $N_{II}$, $\eta_{II}$ is an initial phase of the measurement noise signal, and $b_{II}$ is a bias level.)

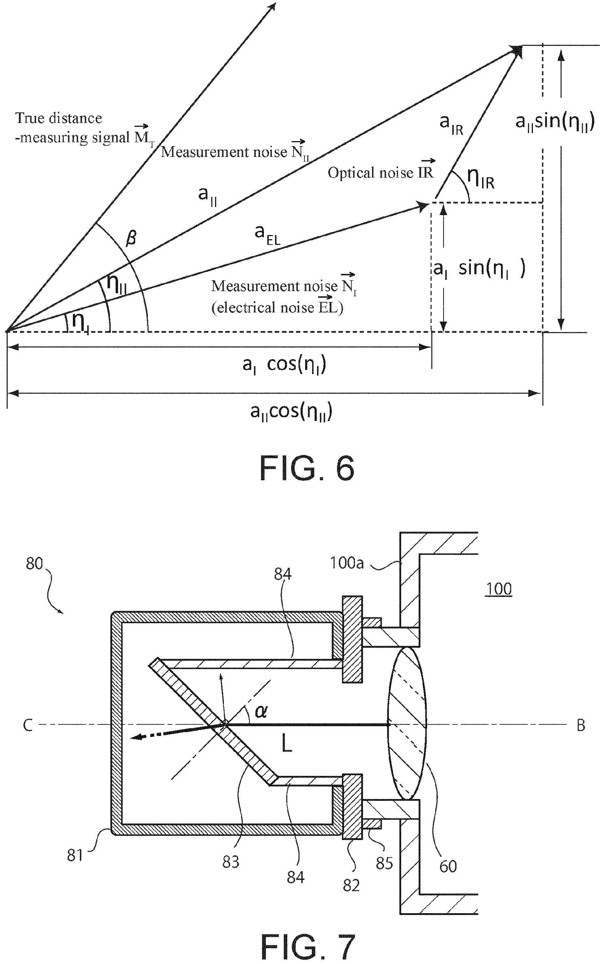

The measurement noise signal $N_{II}$ measured under the condition II is a synthetic noise signal of an electrical noise signal EL and an optical noise signal IR, and is expressed vectorially as illustrated in FIG. 6.

The noise signal $N_I$ measured under the condition I is an electrical noise signal EL. Therefore, an average amplitude $a_{EL}$ and an initial phase $\eta_{EL}$ of the electrical noise signal EL are respectively obtained as $a_{EL} = a_I$ and $\eta_{EL} = \eta_I$.

Therefore, from FIG. 6, an average amplitude $a_{IR}$ and an initial phase $\eta_{IR}$ of an optical noise signal IR can be respectively expressed by the following Expression 7 and Expression 8.

[Numerical Formula 2]

$$a_{IR} = \sqrt{\{a_{II}\sin(\eta_{II}) - a_I\sin(\eta_I)\}^2 + \{a_{II}\cos(\eta_{II}) - a_I\cos(\eta_I)\}^2} \quad \text{( Expression 7 )}$$

(Here, $a_{II}$ is an average amplitude of the measurement noise signal $N_{II}$ and $\eta_{II}$ is an initial phase of the measurement noise signal $N_{II}$, and $a_I$ is an average amplitude of the measurement noise signal $N_I$ and $\eta_I$ is an initial phase of the measurement noise signal $N_I$.)

[Numerical Formula 3]

$$\eta_{IR} = \tan^{-1}\{a_{II}\sin(\eta_{II}) - a_I\sin(\eta_I)\} / \{a_{II}\cos(\eta_{II}) - a_I\cos(\eta_I)\}\} \quad \text{( Expression 8 )}$$

(Here, $a_{II}$ is an average amplitude of the measurement noise signal $N_{II}$ and $\eta_{II}$ is an initial phase of the measurement noise signal $N_{II}$, and $a_I$ is an average amplitude of the measurement noise signal $N_I$ and $\eta_I$ is an initial phase of the measurement noise signal $N_I$.)

The distance-measuring signal M obtained at the time of a distance measurement is expressed by Expression 1. However, this Expression 1 includes noise signals (optical noise signal IR and electrical noise signal EL). Accordingly, an initial phase $\beta_T$ of a true distance-measuring signal $M_T$ from which the noises have been removed from Expression 1 can be obtained from the following Expression 9.

[Numerical Formula 4]

$$\beta_{T=}\tan^{-1}\{A\sin(\beta)-a_{EL}\sin(\eta_{EL})-a_{IR}\sin(\eta_{IR})\} \ / \ \{A\cos(\beta)-a_{EL}\cos(\eta_{EL})-a_{IR}\cos(\eta_{IR})\} \ \} \ (\text{Expression 9})$$

(Here, A is an average amplitude of the distance-measuring signal M, $\beta$ is an initial phase of the distance-measuring signal M, $a_{EL}$ is an average amplitude of the electrical noise signal, $\eta_{EL}$ is an initial phase of the electrical noise signal, $a_{IR}$ is an average amplitude of the optical noise signal IR, and $\eta_{IR}$ is an initial phase of the optical noise signal IR.)

Therefore, by Expression 10 obtained by replacing $\beta$ in Expression 2 with $\beta_T$ in Expression 9, a distance $D_T$ in which an error caused by noises has been removed can be obtained.

$$D_T \ = \ (\beta_T c)/(4\pi F) \quad (\text{Expression 10})$$

In this way, the initial phase $\beta_T$ of the true distance-measuring signal $M_T$ in which noises have been removed can be calculated by using the average amplitude $a_{EL}$ and the initial phase $\eta_{EL}$ of the electrical noise signal EL, and the average amplitude $a_{IR}$ and the initial phase $\eta_{IR}$ of the optical noise signal IR, included in the distance-measuring signal M.

(Measurement of Optical Noise by Using Noise Measuring Jig)

For measurement under the condition that the reflected distance-measuring light does not enter the light receiving unit 20, it is necessary on an instrument-to-instrument basis to install the electro-optical distance meter 100 at an outdoor location without obstacles at night. However, this work is very time-consuming. Therefore, a noise measuring jig 80 is attached to the electro-optical distance meter 100 and used to perform a measurement.

The noise measuring jig 80 is detachably attached to a telescope 100a of the electro-optical distance meter 100 so as to close the objective lens 60, and has optical characteristics to remove reflected light by absorbing the distance-measuring light when attached. As an example, one disclosed in Patent Literature 2 can be used.

FIG. 7 illustrates the noise measuring jig 80 similar to one disclosed in Patent Literature 2. The noise measuring jig 80 includes a cylindrical housing 81 opened at one side, and a donut-disc-shaped lid body 82 that has an opening at a center and closes the opening of the housing 81. The housing 81 is made of a non-translucent metal or resin. Inside the housing 81, a glass filter 83 that absorbs light of a wavelength of the distance-measuring light L, and a laser light absorber 84 such as black flocked paper are provided.

The noise measuring jig 80 is attached to the electro-optical distance meter 100 so that an axial line C of the housing 81 matches an optical axis B of the distance-measuring light L. The glass filter 83 is disposed so that the distance-measuring light L enters at a Brewster's angle $\alpha$. In addition, the laser light absorber 84 is disposed so that light reflected by the glass filter 83 enters the laser light absorber 84. The noise measuring jig 80 is configured so that a polarization plane of the distance-measuring light L as linearly polarized light becomes a plane of incidence on the glass filter 83.

With the configuration described above, most of the distance-measuring light L becomes P-wave and is refracted to enter the inside of the glass filter 83, and is absorbed by the glass filter 83. The distance-measuring light L is not perfect linearly polarized light, however, S-wave is reflected by the glass filter 83 and absorbed by the laser light absorber 84.

In this way, it was estimated that, when the noise measuring jig 80 was attached, the distance-measuring light L was almost completely absorbed and light returning to the electro-optical distance meter 100 was removed. However, in actuality, due to diffuse reflection, etc., on a boundary surface of the glass filter 83, a slight amount of returning light that enters the electro-optical distance meter 100 through the objective lens 60 is generated.

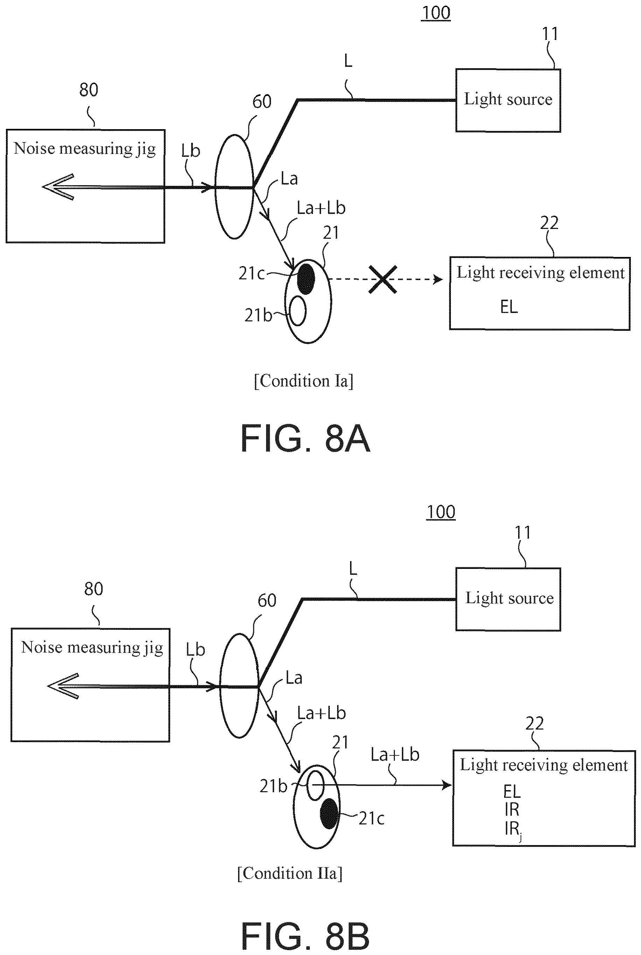

FIG. 8A illustrates noise measured under the condition I in a state where the noise measuring jig 80 is attached.

[Condition I]

(1) The received light amount adjusting means 21 is put into a state where it completely blocks light (transmittance: 0%),

(2) the light source 11 is caused to emit light, and

(3) a bias voltage to be applied to the light receiving element is controlled to an optimum value (that is, a multiplication factor is set to an optimum value).

Hereinafter, this condition (with noise measuring jig + condition I) is referred to as [Condition Ia].

When the light source 11 is caused to emit light, the distance-measuring light L enters the noise measuring jig 80 through the objective lens 60. At this time, a part of the distance-measuring light L advances as internal reflected light La toward the light receiving element 22. In addition, while most of the distance-measuring light L that has entered the noise measuring jig 80 is absorbed by the noise measuring jig 80, a part of the distance-measuring light L advances as returning light Lb toward the light receiving element 22. However, the received light amount adjusting means 21 blocks the internal reflected light La and the returning light Lb, and in the light receiving element 22, as a measurement noise signal $N_{Ia}$, only an electrical noise signal EL is detected.

FIG. 8B illustrates noise measured under the condition II in a state where the noise measuring jig 80 is attached.

[Condition II]

(1a) The received light amount adjusting means 21 is put into a state where it transmits light most (transmittance: 100%),

(2) the light source 11 is caused to emit light, and

(3) the bias voltage to be applied to the light receiving element 22 is set to an optimum value (that is, a multiplication factor is set to an optimum value).

Hereinafter, this condition is referred to as [Condition IIa] .

When the light source 11 is caused to emit light, as in FIG. 8A, the internal reflected light La and the returning light Lb advance toward the light receiving element 22. The internal reflected light La and the returning light Lb are transmitted through the received light amount adjusting means 21 and detected by the light receiving element 22. In the light receiving element 22, as a measurement noise signal $N_{IIa}$, in addition to an electrical noise signal EL and an optical noise signal IR derived from the internal reflected light La, a jig-derived noise signal $IR_j$ derived from the returning light Lb is detected.

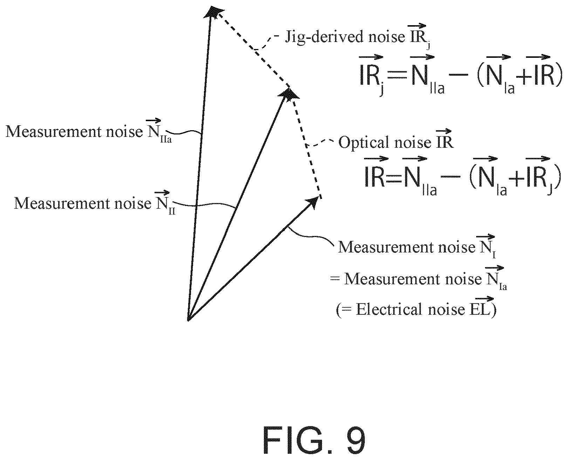

FIG. 9 is a view vectorially illustrating relationships of the measurement noise signal $N_{IIa}$ with the optical noise signal IR, the jig-derived noise signal $IR_j$, and the electrical noise signal EL, measured with the noise measuring jig attached under the condition IIa. As described above, the measurement noise signal $N_{IIa}$ is a synthetic vector of the electrical noise signal EL, the optical noise signal IR, and the jig-derived noise signal $IR_j$.

Therefore, by subtracting the jig-derived noise signal $IR_j$ and the electrical noise signal EL from the measurement noise signal $N_{IIa}$, the optical noise signal IR can be obtained.

Here, the electrical noise signal EL can be measured as a measurement noise signal $N_{Ia}$ by measurement under the condition Ia. On the other hand, the jig-derived noise signal $IR_j$ cannot be directly measured.

The electrical noise signal EL greatly fluctuates due to environmental changes such as changes in surrounding temperature and power supply (battery) voltage, and mechanical deterioration caused by aging. On the other hand, the optical noise signal IR and the jig-derived noise signal $IR_j$ are values that do not fluctuate due to measurement conditions, environmental changes and changes caused by aging and are unique to the instrument (electro-optical distance meter 100) or the jig.

Therefore, by using the electro-optical distance meter 100, the optical noise signal IR is known in advance by subtracting the measurement noise signal $N_I$ (that is, the electrical noise signal EL) measured under the condition I in a state where collimation to a night sky is performed from the measurement noise signal $N_{II}$ measured under the condition I in a state where collimation to a night sky is performed.

Next, by using the optical noise signal IR obtained in advance by measuring the measurement noise signal $N_{IIa}$ and the measurement noise signal $N_{Ia}$ (electrical noise signal EL) by using the same electro-optical distance meter 100, the jig-derived noise signal $IR_j$ is obtained from Expression 11.

[Numerical Formula 5]

$$\overrightarrow{IR_j} = \overrightarrow{N_{IIa}} - \left(\overrightarrow{N_{Ia}} + \overrightarrow{IR}\right) \qquad (\text{ Expression 11 })$$

The jig-derived noise signal $IR_j$ is a value unique to the jig. The jig-derived noise signal $IR_j$ is the same value even when a measurement is performed with another electro-optical distance meter as long as the conditions of the distance-measuring light L such as a laser light wavelength and energy, and a light receiving signal reading method, are the same, that is, as long as the electro-optical distance meter has the same configuration as that of the electro-optical distance meter 100. Therefore, once the value of the jig-derived noise signal is known, by measuring the measurement noise signal $N_{IIa}$ and the measurement noise signal $N_{Ia}$ with the noise measuring jig 80 attached to an arbitrary electro-optical distance meter 100, an optical noise signal IR unique to the electro-optical distance meter 100 used for the measurement can be obtained from Expression 12.

[Numerical Formula 6]

$$\overrightarrow{IR} = \overrightarrow{N_{IIa}} - \left(\overrightarrow{N_{Ia}} + \overrightarrow{IR_j}\right) \qquad (\text{ Expression 12 })$$

All of the noise signals described above exhibit the simular behavior as that of the distance-measuring signal M, and a synthetic sine wave obtained by applying a result of synchronous addition of N data of one period of the noise signals to a sine wave is expressed by a general expression of Expression 4. Therefore, by obtaining average amplitudes $a_{Ia}$, $a_{IIa}$, and $a_{IRj}$ and initial phases $\eta_{Ia}$, $\mu_{IIa}$, and $\eta_{IRj}$ of the respective noise signals and performing vector addition and subtraction, the average amplitude $a_{IR}$ and the initial phase $\eta_{IR}$ of the optical noise signal IR can be expressed as functions of the average amplitudes $a_{Ia}$, $a_{IIa}$, and $a_{IRj}$ and initial phases $\eta_{Ia}$, $\mu_{IIa}$, and $\eta_{IRj}$.

By applying this result to Expression 9, an initial phase $\beta_T$ of a true distance-measuring signal $M_T$ is obtained. In addition, by using the obtained initial phase $\beta_T$, a distance $D_T$ from which an error caused by noise has been removed is obtained.

(Operation of Electro-Optical Distance Meter)

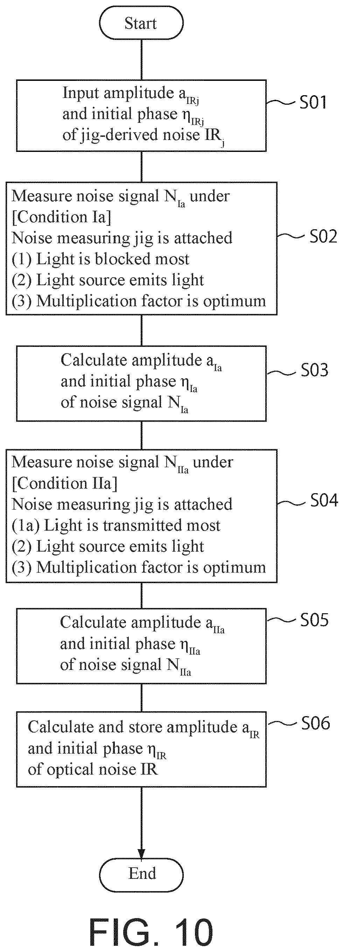

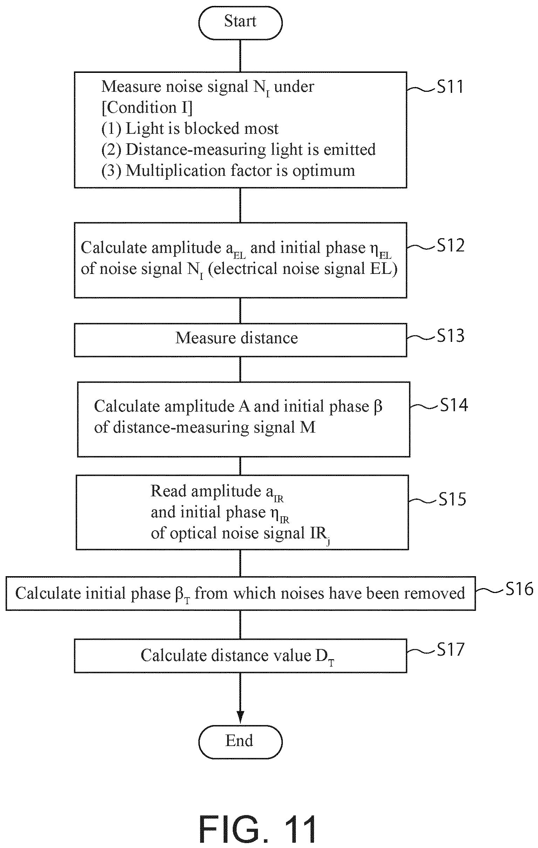

An example of operation of the electro-optical distance meter 100 according to the present embodiment will be described with reference to the flowcharts of FIGS. 10 to 12. FIG. 10 is a flowchart at the time of adjustment before factory shipment or at an agency. FIG. 11 is a flowchart when a measurement is performed.

For noise measurement before factory shipment, a noise measuring jig 80 whose jig-derived noise signal $IR_j$ is known is used. On a surface of the housing 81 of the noise measuring jig 80, values of an average amplitude $a_j$ and an initial phase $\mu_j$ of the jig-derived noise signal $IR_j$ are indicated.

First, in Step S01, the average amplitude $a_j$ and initial phase $\mu_j$ of the jig-derived noise signal $IR_j$ are input into the arithmetic control unit 40. For example, the arithmetic control unit 40 displays an input screen for the average amplitude $a_j$ and initial phase $\mu_j$ of the jig-derived noise signal $IR_j$ on the display unit, and from the input unit, a worker inputs the average amplitude $a_j$ and initial phase $\mu_j$ of the jig-derived noise signal $IR_j$ visually read from the noise measuring jig 80. Alternatively, it is also possible that a program for performing a jig-derived noise measurement is called from a general-purpose computer connected by an external interface, and the values can be input from the computer terminal. This general-purpose computer terminal is configured by, for example, a CPU, a RAM, a ROM, a hard disk, an external storage device, and a network interface, etc.

Next, in Step S02, under the condition Ia, the arithmetic control unit 40 activates the electro-optical distance meter 100 and measures a measurement noise signal $N_{Ia}$ as a first measurement noise signal.

Next, in Step S03, the arithmetic control unit 40 calculates an average amplitude $a_{Ia}$ and an initial phase $\eta_{Ia}$ of the measurement noise signal $N_{Ia}$, and stores these in the storage unit 50.

Next, in Step S04, under the condition IIa, the arithmetic control unit 40 activates the electro-optical distance meter 100 and measures a measurement noise signal $N_{IIa}$ as a second measurement noise signal.

Next, in Step S05, the arithmetic control unit 40 calculates an average amplitude $a_{IIa}$ and an initial phase $\eta_{IIa}$ of the measurement noise signal $N_{IIa}$, and stores these in the storage unit 50.

Next, in Step S06, by using the average amplitudes $a_{Ia}$, $a_{IIa}$, and $a_{IRj}$ and initial phases $\eta_{Ia}$, $\mu_{IIa}$, and $\mu_{IRj}$, the

arithmetic control unit 40 calculates an average amplitude $a_{IR}$ and an initial phase $\eta_{IR}$ of the optical noise signal IR by subtracting the measurement noise signal $N_{Ia}$ and the jig-derived noise signal $IR_j$ from the measurement noise signal $N_{IIa}$, and stores these as an optical noise signal IR in the storage unit 50.

The average amplitude $a_{Ia}$ and the initial phase $\eta_{Ia}$ in Step S02 and the average amplitude $a_{IIa}$ and the initial phase $\eta_{IIa}$ in Step S04 may be discarded or held after being used for calculation of the average amplitude $a_{IR}$ and the initial phase $\eta_{IR}$ in Step S05.

Next, when performing a measurement, measurement is performed by collimation to a measuring object (for example, a target).

First, in Step S11, under the condition I, the arithmetic control unit 40 activates the electro-optical distance meter 100 and measures a measurement noise signal $N_I$.

Next, in Step S12, the arithmetic control unit 40 calculates, an average amplitude $a_I$ and an initial phase $\eta_I$ of the measurement noise signal $N_I$, and stores these as an average amplitude $a_{EL}$ and an initial phase $\eta_{EL}$ of the electrical noise signal EL in the storage unit 50.

Next, in Step S13, the arithmetic control unit 40 activates the electro-optical distance meter 100 and adjusts the received light amount adjusting means 21 so that the received light amount becomes proper (proper condition), emits distance-measuring light to measure a distance-measuring signal M based on reflected distance-measuring light L by setting a multiplication factor of the light receiving element to an optimum value.

Next, in Step S14, the arithmetic control unit 40 obtains an average amplitude A and an initial phase $\beta$ of the measured distance-measuring signal M.

Next, in Step S15, the arithmetic control unit 40 reads the average amplitude $a_{IR}$ and the initial phase $\eta_{IR}$ of the optical noise signal IR from the storage unit 50.

Next, in Step S16, based on the average amplitudes $a_{IR}$, $a_{EL}$, and A and initial phases $\eta_{IRr}$ $\mu_{EL}$, and $\beta$, an initial phase $\beta_T$ of a true distance-measuring signal $M_T$ in which noise has been removed by subtracting the optical noise signal IR and the electrical noise signal EL from the distance-measuring signal M is calculated.

Next, in Step S17, the arithmetic control unit 40 calculates a distance $D_T$ in which an error caused by noise has been removed based on the calculated initial phase $\beta_T$, and ends the processing.

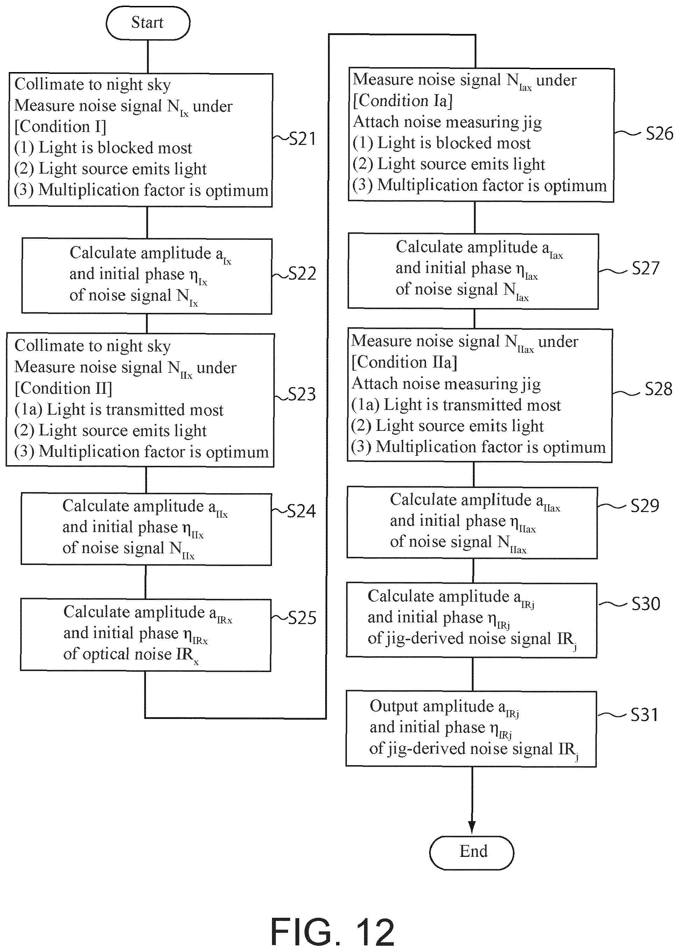

FIG. 12 is a flowchart of measuring a jig-derived noise signal $IR_j$. For measurement of the jig-derived noise signal $IR_j$, an electro-optical distance meter 100x having the same mechanical configuration as that of the electro-optical distance meter 100 is used. To avoid confusion, the components of the electro-optical distance meter 100x are represented by adding x to the same reference signs as in the electro-optical distance meter 100. The same applies to noise caused by the electro-optical distance meter 100x.

First, in Step S21, in a state where collimation to a night sky is performed, under the condition I, the arithmetic control unit 40x activates the electro-optical distance meter 100x and measures a noise signal $N_{Ix}$ as a third noise signal.

Next, in Step S22, the arithmetic control unit 40x calculates an average amplitude $a_{Ix}$ and an initial phase $\eta_{Ix}$ of the noise signal $N_{Ix}$, and stores these in the storage unit 50x.

Next, in Step S23, in a state where collimation to a night sky is performed, under the condition II, the arithmetic control unit 40x activates the electro-optical distance meter 100x, and measures a noise signal $N_{IIx}$ as a fourth noise signal.

Next, in Step S24, the arithmetic control unit 40x calculates an average amplitude $a_{IIx}$ and an initial phase $\eta_{IIx}$ of the noise signal $N_{IIx}$, and stores these in the storage unit 50x.

Next, in Step S25, by using the average amplitudes $a_{Ix}$ and $a_{IIx}$ and the initial phases $\eta_{Ix}$ and $\eta_{IIx}$, the arithmetic control unit 40x calculates an average amplitude $a_{IRx}$ and an initial phase $\eta_{IRx}$ of the optical noise signal $IR_x$ obtained by subtracting the noise signal $N_{Ix}$ from the noise signal $N_{IIX}$, and stores these as an optical noise signal $IR_x$ in the storage unit 50x.

In Step S26, under the condition Ia, the arithmetic control unit 40x activates the electro-optical distance meter 100x, and measures a noise signal $N_{Iax}$ as a fifth measurement noise signal.

Next, in Step S27, the arithmetic control unit 40x calculates an average amplitude $a_{Iax}$ and an initial phase $\eta_{Iax}$ of the measurement noise signal $N_{Iax}$, and stores these in the storage unit 50x.

Next, in Step S28, under the condition IIa, the arithmetic control unit 40x activates the electro-optical distance meter 100x and measures a measurement noise signal $N_{IIax}$ as a sixth measurement noise signal.

Next, in Step S29, the arithmetic control unit 40x calculates an average amplitude $a_{IIax}$ and an initial phase $\eta_{IIax}$ of the noise signal $N_{IIax}$, and stores these in the storage unit 50x.

Next, in Step S30, by using the average amplitudes $a_{Iax}$, $a_{IIax}$, and $a_{IRx}$ and initial phases $\mu_{Iax}$, $\eta_{IIax}$, and $\eta_{IRx}$, the arithmetic control unit 40 calculates an average amplitude $a_{IRj}$ and an initial phase $\mu_{IRj}$ of a jig-derived noise signal $IR_j$ obtained by subtracting the measurement noise signal $N_{Iax}$ and the optical noise signal $IR_x$ from the measurement noise signal $N_{IIax}$, and stores these in the storage unit 50x.

Next, in Step S31, the arithmetic control unit 40x outputs the calculated average amplitude $a_{IRj}$ and initial phase $\eta_{IRj}$ of the jig-derived noise signal $N_{IRj}$. As the output, for example, the values may be displayed on the display unit. Alternatively, the values may be output to a data collector, an external terminal, a USB memory, or the like through an external interface.

The optical noise signal IRx of the electro-optical distance meter 100x can be known through the steps as illustrated in FIG. 13 and stored in the storage unit 50x.

The electro-optical distance meter 100 configured to execute the operation described above is configured so as to calculate a distance value from a true distance-measuring signal $M_T$ obtained by subtracting an optical noise signal IR stored in advance in the storage unit and an electrical noise signal EL measured before a distance measurement from a distance-measuring signal M, so that an error in a distance value caused by noise can be reduced without specially devising components and wirings.

According to the electro-optical distance meter 100 described above, an accurate optical noise signal IR can be obtained by using the noise measuring jig 80. The accuracy in distance calculation is improved. The optical noise signal IR is normally small, and takes time to measure. In the electro-optical distance meter 100, it is not necessary to measure an optical noise signal IR at the time of a distance measurement, so that the time to be taken from the distance measurement to calculation can be shortened. Further, in response to fluctuation of the electrical noise signal EL, the electrical noise signal EL can be removed, and in this regard, more accurate distance calculation can be performed.

In particular, in the electro-optical distance meter 100, a measurement of an optical noise signal IR is enabled by attaching the noise measuring jig 80, so that each measurement of an optical noise signal IR does not need to be performed outdoors at night, and the work load can be reduced.

In addition, after a jig-derived noise signal $IR_j$ of the noise measuring jig 80 is known by using the electro-optical distance meter 100x whose optical noise IRx has been known, the noise measuring jig 80 can be used any number of times to measure optical noise signals IR of other electro-optical distance meters 100.

In the present embodiment, as the noise measuring jig 80, the noise measuring jig 80 disclosed in Patent Literature 2 is used. The noise measuring jig 80 is configured to absorb light entering the jig so that the light hardly returns to the electro-optical distance meter 100. The noise measuring jig 80 is not limited to this, and only has to have a unique jig-derived noise signal $IR_j$. For example, it is also possible that, inside a similar cylindrical housing, a deflecting mirror is disposed at 45° with respect to an optical axis of distance-measuring light, and a laser absorber is disposed at a position where reflected light enters. However, with a configuration in which light hardly returns as with the noise measuring jig 80, an absolute value of the jig-derived noise signal $IR_j$ becomes small. The jig-derived noise signal $IR_j$ is a unique value and rarely fluctuates. But, in actuality, the jig-derived noise signal $IR_j$ may slightly fluctuate due to the temperature and changes caused by aging. However, as the absolute value of the jig-derived noise signal becomes small, a fluctuation value is also small, so that more accurate optical noise measurement is possible.

As compared with an optical noise signal IR derived from internal reflection, the jig-derived noise signal $IR_j$ is small. For example, when the optical noise signal IR is 4, the jig-derived noise signal is approximately 0.1 to 1. However, under the condition that a distance-measuring signal to be received is small as in a case of non-prism distance measurement and a case where the measuring object is distant, even such a small noise signal is not negligible. In the present embodiment, an optical noise signal IR derived from internal reflection can be accurately calculated, so that a minimum signal can also be used, and measurement accuracy is improved.

A jig-derived noise signal $IR_j$ is a smaller value than an optical noise signal IR, so that it takes a longer time to measure. In the present embodiment, a jig-derived noise signal $IR_j$ is known in advance, and an optical noise signal IR is calculated, and accordingly, the amount of time-consuming work can be reduced, and the work efficiency can be improved.

Preferred embodiments of the present invention have been described above, and the embodiments described above are examples of the present invention, and these can be combined based on knowledge of those skilled in the art, and such a combined embodiment is also included in the scope of the present invention.

Reference Signs List

|     |     |
| --- | --- |
| 10: | Light transmitting unit |
| 11: | Light source |
| 20: | Light receiving unit |
| 21: | Received light amount adjusting means |
| 22: | Light receiving element |
| 40: | Arithmetic control unit |
| 50: | Storage unit |
| 52: | Electrical noise |
| 53: | Optical noise |
| 60: | Objective lens |

70:     Target
100:    Electro-optical distance meter

**Claims**

1.  An electro-optical distance meter comprising:

    a first light source configured to emit distance-measuring light toward a measuring object;
    a first light receiving unit including a first light receiving element configured to receive the distance-measuring light reflected by the measuring object and convert the distance-measuring light into a distance-measuring signal, and a first received light amount adjusting means configured to adjust a light amount entering the first light receiving element;
    a first objective lens configured to condense the reflected distance-measuring light to the first light receiving unit;
    a first arithmetic control unit configured to calculate a distance to the measuring object from an initial phase of the distance-measuring signal; and **characterized by**
    a first storage unit configured to store the distance-measuring signal, distance value data, and an optical noise signal, and
    configured to measure an electrical noise signal by putting the first received light amount adjusting means into a state where the first received light amount adjusting means completely blocks light and causing the first light source to emit light, measure a distance-measuring signal of the measuring object by putting the first received light amount adjusting means into a proper state, and calculate a distance by subtracting the electrical noise signal and the optical noise signal from the distance-measuring signal, wherein
    the first arithmetic control unit
    measures a first noise signal by putting the first received light amount adjusting means into a state where the first received light amount adjusting means completely blocks light and causing the first light source to emit light with a noise measuring jig having a unique jig-derived noise signal attached, the noise measuring jig being attachable to and detachable from the electro-optical distance meter and configured to remove reflected distance-measuring light entering the first light receiving unit when attached,
    measures a second noise signal by putting the first received light amount adjusting means into a state where the first received light amount adjusting means transmits light most and causing the first light source to emit light in a state where the noise measuring jig is attached, and
    calculates the optical noise signal by subtracting the first noise signal and the jig-derived noise signal from the second noise signal, and stores the optical noise signal in the first storage unit.

2.  The electro-optical distance meter according to Claim 1, wherein
    the jig-derived noise signal is obtained by:

    by using a second electro-optical distance meter including a second light source configured to emit distance-measuring light toward a measuring object, a second light receiving unit including a second light receiving element configured to receive the distance-measuring light reflected by the measuring object and convert the distance-measuring light into a distance-measuring signal, and a second received light amount adjusting means configured to adjust a light amount entering the second light receiving element, a second objective lens configured to condense the reflected distance-measuring light to the second light receiving unit, a second arithmetic control unit configured to calculate a distance to the measuring object based on the distance-measuring signal, and a second storage unit,
    in a state where collimation to a night sky is performed, measuring a third noise signal by putting the second received light amount adjusting means into a state where the second received light amount adjusting means completely blocks light and causing the second light source to emit light, measuring a fourth noise signal by putting the second received light amount adjusting means into a state where the second received light amount adjusting means transmits light most and causing the second light source to emit light, and calculating an optical noise signal unique to the second electro-optical distance meter by subtracting the third noise signal from the fourth noise signal,
    measuring a fifth measurement noise signal by putting the second received light amount adjusting means into a state where the second received light amount adjusting means completely blocks light and causing the second light source to emit light in a state where the noise measuring jig is attached, and measuring a sixth measurement noise signal by putting the second received light amount adjusting means into a state where the second received light amount adjusting means transmits light most in a state where the noise measuring jig is attached, and

subtracting the fifth measurement noise signal and the unique optical noise signal from the sixth measurement noise signal.

3. The electro-optical distance meter according to Claim 1 or 2, wherein

the noise measuring jig includes a bottomed cylindrical housing, a glass filter configured to absorb light of a wavelength of the distance-measuring light, and a laser light absorber configured to absorb the distance-measuring light reflected by the glass filter, and
the glass filter is installed so that distance-measuring light emitted through the first or second objective lens enters the glass filter at a Brewster's angle in an attached state of the noise measuring jig.

4. A method for calculating an optical noise signal, using an electro-optical distance meter including a light source configured to emit distance-measuring light toward a measuring object, a light receiving unit including a light receiving element configured to receive the distance-measuring light reflected by the measuring object to convert the distance-measuring light into a distance-measuring signal and a received light amount adjusting means configured to adjust a light amount entering the light receiving element, **characterized by** a storage unit configured to store an optical noise signal, and an arithmetic control unit configured to measure an electrical noise signal by putting the received light amount adjusting means into a state where the received light amount adjusting means completely blocks light and causing the light source to emit light to calculate a distance to the measuring object by subtracting the electrical noise signal and the optical noise signal from the distance-measuring signal of the measuring object based on the distance-measuring signal, the method comprising:

measuring a first noise signal by putting the received light amount adjusting means into a state where the received light amount adjusting means completely blocks light and causes the light source to emit light with a noise measuring jig attached, the jig having a unique jig-derived noise signal, attachable to and detachable from the electro-optical distance meter;
measuring a second noise signal by putting the received light amount adjusting means into a state where the received light amount adjusting means transmits light most and causing the light source to emit light with the noise measuring jig attached; and
calculating the optical noise signal by subtracting the first noise signal and the jig-derived noise signal from the second noise signal.

**Patentansprüche**

1. Elektrooptischer Entfernungsmesser mit:

einer ersten Lichtquelle, die dazu ausgebildet ist, Entfernungsmesslicht in Richtung eines Messobjekts zu emittieren;
einer ersten Lichtempfangseinheit, die ein erstes Lichtempfangselement aufweist, das dazu ausgebildet ist, das von dem Messobjekt reflektierte Entfernungsmesslicht zu empfangen und das Entfernungsmesslicht in ein Entfernungsmesssignal umzuwandeln, und eine erste Empfangslichtmengeneinstelleinrichtung aufweist, die dazu ausgebildet ist, eine in das erste Lichtempfangselement eintretende Lichtmenge einzustellen;
einer ersten Objektivlinse, die dazu ausgebildet ist, das reflektierte Entfernungsmesslicht zu der ersten Lichtempfangseinheit zu bündeln;
einer ersten arithmetischen Steuereinheit, die dazu ausgebildet ist, eine Entfernung von dem Messobjekt aus einer Anfangsphase des Entfernungsmesssignals zu berechnen; und
**gekennzeichnet durch**
eine erste Speichereinheit, die dazu ausgebildet ist, das Entfernungsmesssignal, Entfernungsbetragsdaten und ein optisches Rauschsignal zu speichern, und
dazu ausgebildet ist, ein elektrisches Rauschsignal zu messen, indem die erste Empfangslichtmengeneinstelleinrichtung in einen Zustand versetzt wird, in welchem die erste Empfangslichtmengeneinstelleinrichtung Licht vollständig blockiert, und die erste Lichtquelle zum Emittieren von Licht veranlasst wird, ein Entfernungsmesssignal des Messobjekts zu messen, indem die erste Empfangslichtmengeneinstelleinrichtung in einen korrekten Zustand versetzt wird, und eine Entfernung durch Subtrahieren des elektrischen Rauschsignals und des optischen Rauschsignals von dem Entfernungssignal zu berechnen, wobei
die erste arithmetische Steuereinheit
ein erstes Rauschsignal misst, indem sie die erste Empfangslichtmengeneinstelleinrichtung in einen Zustand versetzt, in welchem die erste Empfangslichtmengeneinstelleinrichtung Licht vollständig blockiert, und die erste Lichtquelle veranlasst, bei einer angebrachten Rauschmessvorrichtung, die ein spezifisches von der Vorrichtung abgeleitetes Rauschsignal aufweist, Licht zu emittieren, wobei die Rauschmessvorrichtung an dem elektrooptischen Entfernungsmesser anbringbar und von diesem lösbar ist und dazu ausgebildet ist, wenn sie angebracht ist, in die erste Lichtempfangseinheit eintretendes reflektiertes Entfernungsmesslicht zu entfernen,

ein zweites Rauschsignal misst, indem sie die erste Empfangslichtmengeneinstelleinrichtung in einen Zustand versetzt, in welchem die erste Empfangslichtmengeneinstelleinrichtung am meisten Licht transmittiert, und die erste Lichtquelle veranlasst, in einem Zustand, in welchem die Rauschmessvorrichtung angebracht ist, Licht zu emittieren, und

das optische Rauschsignal berechnet, indem sie das erste Rauschsignal und das von der Vorrichtung abgeleitete Rauschsignal von dem zweiten Rauschsignal subtrahiert, und das erste optische Rauschsignal in der ersten Speichereinheit speichert.

**2.** Elektrooptischer Entfernungsmesser nach Anspruch 1, bei welchem das von der Vorrichtung abgeleitete Rauschsignal erhalten wird durch:

durch Verwenden eines zweiten elektrooptischen Entfernungsmessers mit einer zweiten Lichtquelle, die dazu ausgebildet ist, Entfernungsmesslicht in Richtung eines Messobjekts zu emittieren, einer zweiten Lichtempfangseinheit, die ein zweites Lichtempfangselement aufweist, das dazu ausgebildet ist, das von dem Messobjekt reflektierte Entfernungsmesslicht zu empfangen und das Entfernungsmesslicht in ein Entfernungsmesssignal umzuwandeln, und eine zweite Empfangslichtmengeneinstelleinrichtung aufweist, die dazu ausgebildet ist, eine in das zweite Lichtempfangselement eintretende Lichtmenge einzustellen, einer zweiten Objektivlinse, die dazu ausgebildet ist, das reflektierte Entfernungsmesslicht zu der zweiten Lichtempfangseinheit zu bündeln, einer zweiten arithmetischen Steuereinheit, die dazu ausgebildet ist, eine Entfernung von dem Messobjekt anhand des Entfernungsmesssignals zu berechnen, und einer zweiten Speichereinheit,

in einem Zustand, in welchem eine Kollimierung für einen Nachthimmel durchgeführt wird, Messen eines dritten Rauschsignals, indem die zweite Empfangslichtmengeneinstelleinrichtung in einen Zustand versetzt wird, in welchem die zweite Empfangslichtmengeneinstelleinrichtung Licht vollständig blockiert, und die zweite Lichtquelle veranlasst wird, Licht zu emittieren, Messen eines vierten Rauschsignals, indem die zweite Empfangslichtmengeneinstelleinrichtung in einen Zustand versetzt wird, in welchem die zweite Empfangslichtmengeneinstelleinrichtung am meisten Licht transmittiert, und die zweite Lichtquelle veranlasst wird, Licht zu emittieren, und Berechnen eines für den zweiten elektrooptischen Entfernungsmesser spezifischen optischen Rauschsignals durch Subtrahieren des dritten Rauschsignals von dem vierten Rauschsignal,

Messen eines fünften Messrauschsignals, indem die zweite Empfangslichtmengeneinstelleinrichtung in einen Zustand versetzt wird, in welchem die zweite Empfangslichtmengeneinstelleinrichtung Licht vollständig blockiert, und die zweite Lichtquelle veranlasst wird, bei angebrachter Rauschmessvorrichtung Licht zu emittieren, und Messen eines sechsten Messrauschsignals, indem die zweite Empfangslichtmengeneinstelleinrichtung in einen Zustand versetzt wird, in welchem sie bei angebrachter Rauschmessvorrichtung am meisten Licht transmittiert, Subtrahieren des fünften Messrauschsignals und des spezifischen optischen Rauschsignals von dem sechsten Messrauschsignal.

**3.** Elektrooptischer Entfernungsmesser nach Anspruch 1 oder 2, bei welchem

die Rauschmessvorrichtung ein zylindrisches Gehäuse mit Boden, einen Glasfilter, der dazu ausgebildet ist, Licht mit einer Wellenlänge des Entfernungsmesslichts zu absorbieren, und einen Laserlichtabsorber aufweist, der dazu ausgebildet ist, das von dem Glasfilter reflektierte Entfernungsmesslicht zu absorbieren, und der Glasfilter derart eingebaut ist, dass durch die erste oder zweite Objektivlinse emittiertes Entfernungsmesslicht im angebrachten Zustand der Rauschmessvorrichtung unter einem Polarisationswinkel in den Glasfilter eintritt.

**4.** Verfahren zum Berechnen eines optischen Rauschsignals unter Verwendung eines elektrooptischen Entfernungsmessers mit einer Lichtquelle, die dazu ausgebildet ist, Entfernungsmesslicht in Richtung eines Messobjekts zu emittieren, einer Lichtempfangseinheit, die ein Lichtempfangselement aufweist, das dazu ausgebildet ist, das von dem Messobjekt reflektierte Entfernungsmesslicht zu empfangen und das Entfernungsmesslicht in ein Entfernungsmesssignal umzuwandeln, und eine Empfangslichtmengeneinstelleinrichtung aufweist, die dazu ausgebildet ist, eine in das erste Lichtempfangselement eintretende Lichtmenge einzustellen,

**gekennzeichnet durch**

eine Speichereinheit, die dazu ausgebildet ist, ein optisches Rauschsignal zu speichern,
und eine arithmetische Steuereinheit, die dazu ausgebildet ist, ein elektrisches Rauschsignal zu messen, indem sie die Empfangslichtmengeneinstelleinrichtung in einen Zustand versetzt, in welchem die Empfangslichtmengeneinstelleinrichtung Licht vollständig blockiert, und die erste Lichtquelle veranlasst, Licht zu emittieren, um eine Entfernung von dem Messobjekt durch Subtrahieren des elektrischen Rauschsignals und des optischen Rauschsignals von dem Entfernungsmesssignal des Messobjekts basierend auf dem Entfernungsmesssignal zu berechnen, wobei das Verfahren die folgenden Schritte aufweist:

Messen eines ersten Rauschsignals, indem die Empfangslichtmengeneinstelleinrichtung in einen Zustand versetzt wird, in welchem die Empfangslichtmengeneinstelleinrichtung Licht vollständig blockiert, und die erste Lichtquelle veranlasst wird, bei einer angebrachten Rauschmessvorrichtung, die ein spezifisches von der Vorrichtung abgeleitetes Rauschsignal aufweist, Licht zu emittieren, wobei die Rauschmessvorrichtung an dem elektrooptischen Entfernungsmesser anbringbar und von diesem lösbar ist;
Messen eines zweiten Rauschsignals, indem die Empfangslichtmengeneinstelleinrichtung in einen Zustand versetzt wird, in welchem die Empfangslichtmengeneinstelleinrichtung am meisten Licht transmittiert, und die Lichtquelle veranlasst wird, bei angebrachter Rauschmessvorrichtung Licht zu emittieren; und
Berechnen des optischen Rauschsignals, indem das erste Rauschsignal und das von der Vorrichtung abgeleitete Rauschsignal von dem zweiten Rauschsignal subtrahiert werden.

## Revendications

1. Appareil de mesure de distance électro-optique comprenant :

une première source de lumière configurée pour émettre une lumière de mesure de distance vers un objet de mesure ;
une première unité de réception de lumière comportant un premier élément de réception de lumière configuré pour recevoir la lumière de mesure de distance réfléchie par l'objet de mesure et convertir la lumière de mesure de distance en un signal de mesure de distance, et un premier moyen d'ajustement de quantité de lumière reçue configuré pour ajuster une quantité de lumière entrant dans le premier élément de réception de lumière ;
un premier objectif configuré pour condenser la lumière de mesure de distance réfléchie vers la première unité de réception de lumière ;
une première unité de commande arithmétique configurée pour calculer une distance par rapport à l'objet de mesure à partir d'une phase initiale du signal de mesure de distance ; et **caractérisé par**
une première unité de stockage configurée pour stocker le signal de mesure de distance, des données de valeur de distance et un signal de bruit optique, et
configurée pour mesurer un signal de bruit électrique en mettant le premier moyen d'ajustement de quantité de lumière reçue dans un état où le premier moyen d'ajustement de quantité de lumière reçue bloque complètement la lumière et amenant la première source de lumière à émettre de la lumière, mesurer un signal de mesure de distance de l'objet de mesure en mettant le premier moyen d'ajustement de quantité de lumière reçue dans un état correct, et calculer une distance en soustrayant le signal de bruit électrique et le signal de bruit optique du signal de mesure de distance, dans lequel
la première unité de commande arithmétique
mesure un premier signal de bruit en mettant le premier moyen d'ajustement de quantité de lumière reçue dans un état où le premier moyen d'ajustement de quantité de lumière reçue bloque complètement la lumière et en amenant la première source de lumière à émettre de la lumière avec un gabarit de mesure de bruit ayant un signal de bruit dérivé de gabarit propre attaché, le gabarit de mesure de bruit pouvant être attaché à et détaché de l'appareil de mesure de distance électro-optique et étant configuré pour éliminer la lumière de mesure de distance réfléchie entrant dans la première unité de réception de lumière lorsqu'il est attaché,
mesure un deuxième signal de bruit en mettant le premier moyen d'ajustement de quantité de lumière reçue dans un état où le premier moyen d'ajustement de quantité de lumière reçue transmet de la lumière au maximum et en amenant la première source de lumière à émettre de la lumière dans un état où le gabarit de mesure de bruit est attaché, et
calcule le signal de bruit optique en soustrayant le premier signal de bruit et le signal de bruit dérivé de gabarit du deuxième signal de bruit, et stocke le signal de bruit optique dans la première unité de stockage.

2. Appareil de mesure de distance électro-optique selon la revendication 1, dans lequel
le signal de bruit dérivé de gabarit est obtenu par :

l'utilisation d'un second appareil de mesure de distance électro-optique comportant une seconde source de lumière configurée pour émettre une lumière de mesure de distance vers un objet de mesure, une seconde unité de réception de lumière comportant un second élément de réception de lumière configurée pour recevoir la lumière de mesure de distance réfléchie par l'objet de mesure et convertir la lumière de mesure de distance en un signal de mesure de distance, et un second moyen d'ajustement de quantité de lumière reçue configuré pour ajuster une quantité de lumière entrant dans le second élément de réception de lumière, un second objectif configuré pour condenser la lumière de mesure de distance réfléchie vers la seconde unité de réception de lumière, une seconde unité de commande arithmétique configurée pour calculer une distance par rapport à l'objet de mesure d'après le signal de mesure de distance, et une seconde unité de stockage,

dans un état où une collimation vers un ciel nocturne est effectuée, la mesure d'un troisième signal de bruit en mettant le second moyen d'ajustement de quantité de lumière reçue dans un état où le second moyen d'ajustement de quantité de lumière reçue bloque complètement la lumière et en amenant la seconde source de lumière à émettre de la lumière, la mesure d'un quatrième signal de bruit en mettant le second moyen d'ajustement de quantité de lumière reçue dans un état où le second moyen d'ajustement de quantité de lumière reçue transmet de la lumière au maximum et en amenant la seconde source de lumière à émettre de la lumière, et le calcul d'un signal de bruit optique propre au second appareil de mesure de distance électro-optique en soustrayant le troisième signal de bruit du quatrième signal de bruit,

la mesure d'un cinquième signal de bruit de mesure en mettant le second moyen d'ajustement de quantité de lumière reçue dans un état où le second moyen d'ajustement de quantité de lumière reçue bloque complètement la lumière et en amenant la seconde source de lumière à émettre de la lumière dans un état où le gabarit de mesure de bruit est attaché, et la mesure d'un sixième signal de bruit de mesure en mettant le second moyen d'ajustement de quantité de lumière reçue dans un état où le second moyen d'ajustement de quantité de lumière reçue transmet de la lumière au maximum dans un état où le gabarit de mesure de bruit est attaché, et

la soustraction du cinquième signal de bruit de mesure et du signal de bruit optique propre du sixième signal de bruit de mesure.

3. Appareil de mesure de distance électro-optique selon la revendication 1 ou 2, dans lequel

le gabarit de mesure de bruit comporte un logement cylindrique à fond, un filtre en verre configuré pour absorber une lumière d'une longueur d'onde de la lumière de mesure de distance, et un absorbeur de lumière laser configuré pour absorber la lumière de mesure de distance réfléchie par le filtre en verre, et le filtre en verre est installé de sorte qu'une lumière de mesure de distance émise à travers le premier ou le second objectif entre dans le filtre en verre selon un angle de Brewster dans un état attaché du gabarit de mesure de bruit.

4. Procédé de calcul d'un signal de bruit optique, à l'aide d'un appareil de mesure de distance électro-optique comportant une source de lumière configurée pour émettre une lumière de mesure de distance vers un objet de mesure, une unité de réception de lumière comportant un élément de réception de lumière configuré pour recevoir la lumière de mesure de distance réfléchie par l'objet de mesure pour convertir la lumière de mesure de distance en un signal de mesure de distance et un moyen d'ajustement de quantité de lumière reçue configuré pour ajuster une quantité de lumière entrant dans l'élément de réception de lumière, **caractérisé par**

une unité de stockage configurée pour stocker un signal de bruit optique, et une unité de commande arithmétique configurée pour mesurer un signal de bruit électrique en mettant le moyen d'ajustement de quantité de lumière reçue dans un état où le moyen d'ajustement de quantité de lumière reçue bloque complètement la lumière et en amenant la source de lumière à émettre de la lumière pour calculer une distance par rapport à l'objet de mesure en soustrayant le signal de bruit électrique et le signal de bruit optique du signal de mesure de distance de l'objet de mesure d'après le signal de mesure de distance, le procédé comprenant :

la mesure d'un premier signal de bruit en mettant le moyen d'ajustement de quantité de lumière reçue dans un état où le moyen d'ajustement de quantité de lumière reçue bloque complètement la lumière et amène la source de lumière à émettre de la lumière avec un gabarit de mesure de bruit attaché, le gabarit ayant un signal de bruit dérivé de gabarit propre, qui peut être attaché à et détaché de l'appareil de mesure de distance électro-optique ;

la mesure d'un deuxième signal de bruit en mettant le moyen d'ajustement de quantité de lumière reçue dans un état où le moyen d'ajustement de quantité de lumière reçue transmet de la lumière au maximum et en amenant la source de lumière à émettre de la lumière avec le gabarit de mesure de bruit attaché ; et le calcul du signal de bruit optique en soustrayant le premier signal de bruit et le signal de bruit dérivé de gabarit du deuxième signal de bruit.

FIG. 1

FIG. 2

FIG. 3A

FIG. 3B

$$\vec{IR}=\vec{N}_{II}-\vec{N}_{I}$$

$$\vec{M_T}=\vec{M}-(\vec{EL}+\vec{IR})$$

Optical noise $\vec{IR}$
(instrument internal noise)

Measured noise $\vec{N}_{II}$

Actually measured
distance-measuring signal $\vec{M}$

Electrical noise EL
(measured noise $\vec{N}_{I}$)

True distance-measuring signal $M_T$

# FIG. 4

100

11

L

Light source

60

La

21

21c

21b

× → Light receiving element
EL

22

[Condition I]

# FIG. 5A

100

11

L

Light source

60

La

21

21b

21c

Light receiving element
EL
IR

22

Night sky

←

[Condition II]

# FIG. 5B

True distance
-measuring signal $\vec{M}_T$
Measurement noise $\vec{N}_{II}$

Optical noise $\vec{IR}$

$a_{IR}$

$\eta_{IR}$

$a_{II} \sin(\eta_{II})$

$a_{II}$

$\beta$

$a_{EL}$

$\eta_{II}$

Measurement noise $\vec{N}_I$
(electrical noise $\vec{EL}$)

$a_I \sin(\eta_I)$

$\eta_I$

$a_I \cos(\eta_I)$

$a_{II} \cos(\eta_{II})$

# FIG. 6

80

84

100a

100

$\alpha$

C

L

B

81

83

84

82

85

60

# FIG. 7

100

11

L

Light source

80

60

Noise measuring jig

Lb

La

La+Lb

21

21c

21b

✕

22

Light receiving element

EL

[Condition Ia]

# FIG. 8A

100

11

L

Light source

80

60

Noise measuring jig

Lb

La

La+Lb

21

La+Lb

21b

21c

22

Light receiving element

EL
IR
IR$_j$

[Condition IIa]

# FIG. 8B

Jig-derived noise $\vec{IR}_j$

$$\vec{IR}_j = \vec{N}_{IIa} - (\vec{N}_{Ia} + \vec{IR})$$

Measurement noise $\vec{N}_{IIa}$

Optical noise $\vec{IR}$

Measurement noise $\vec{N}_{II}$

$$\vec{IR} = \vec{N}_{IIa} - (\vec{N}_{Ia} + \vec{IR}_j)$$

Measurement noise $\vec{N}_I$

= Measurement noise $\vec{N}_{Ia}$

(= Electrical noise $\vec{EL}$)

# FIG. 9

Start

Input amplitude $a_{IRj}$
and initial phase $\eta_{IRj}$
of jig-derived noise $IR_j$ — S01

Measure noise signal $N_{Ia}$ under
[Condition Ia]
Noise measuring jig is attached
(1) Light is blocked most
(2) Light source emits light
(3) Multiplication factor is optimum — S02

Calculate amplitude $a_{Ia}$
and initial phase $\eta_{Ia}$
of noise signal $N_{Ia}$ — S03

Measure noise signal $N_{IIa}$ under
[Condition IIa]
Noise measuring jig is attached
(1a) Light is transmitted most
(2) Light source emits light
(3) Multiplication factor is optimum — S04

Calculate amplitude $a_{IIa}$
and initial phase $\eta_{IIa}$
of noise signal $N_{IIa}$ — S05

Calculate and store amplitude $a_{IR}$
and initial phase $\eta_{IR}$
of optical noise $IR$ — S06

End

# FIG. 10

```
                    ┌─────────┐
                    │  Start  │
                    └─────────┘
                         │
   ┌─────────────────────────────────────────┐
   │ Measure noise signal N_I under          │ ── S11
   │ [Condition I]                           │
   │ (1) Light is blocked most               │
   │ (2) Distance-measuring light is emitted │
   │ (3) Multiplication factor is optimum    │
   └─────────────────────────────────────────┘
                         │
   ┌─────────────────────────────────────────┐
   │ Calculate amplitude a_EL and initial phase η_EL │ ── S12
   │ of noise signal N_I (electrical noise signal EL)│
   └─────────────────────────────────────────┘
                         │
   ┌─────────────────────────────────────────┐
   │            Measure distance              │ ── S13
   └─────────────────────────────────────────┘
                         │
   ┌─────────────────────────────────────────┐
   │ Calculate amplitude A and initial phase β │ ── S14
   │ of distance-measuring signal M            │
   └─────────────────────────────────────────┘
                         │
   ┌─────────────────────────────────────────┐
   │ Read amplitude a_IR                       │ ── S15
   │ and initial phase η_IR                    │
   │ of optical noise signal IR_j              │
   └─────────────────────────────────────────┘
                         │
 ┌───────────────────────────────────────────────────────────┐
 │ Calculate initial phase β_T from which noises have been removed │ ── S16
 └───────────────────────────────────────────────────────────┘
                         │
   ┌─────────────────────────────────────────┐
   │       Calculate distance value D_T       │ ── S17
   └─────────────────────────────────────────┘
                         │
                         ▼
                    ┌─────────┐
                    │   End   │
                    └─────────┘
```

# FIG. 11

28

Start

Collimate to night sky
Measure noise signal $N_{Ix}$ under
[Condition I]
(1) Light is blocked most
(2) Light source emits light
(3) Multiplication factor is optimum

~S21

Measure noise signal $N_{Iax}$ under
[Condition Ia]
Attach noise measuring jig
(1) Light is blocked most
(2) Light source emits light
(3) Multiplication factor is optimum

~S26

Calculate amplitude $a_{Ix}$
and initial phase $\eta_{Ix}$
of noise signal $N_{Ix}$

~S22

Calculate amplitude $a_{Iax}$
and initial phase $\eta_{Iax}$
of noise signal $N_{Iax}$

~S27

Collimate to night sky
Measure noise signal $N_{IIx}$ under
[Condition II]
(1a) Light is transmitted most
(2) Light source emits light
(3) Multiplication factor is optimum

~S23

Measure noise signal $N_{IIax}$ under
[Condition IIa]
Attach noise measuring jig
(1a) Light is transmitted most
(2) Light source emits light
(3) Multiplication factor is optimum

~S28

Calculate amplitude $a_{IIx}$
and initial phase $\eta_{IIx}$
of noise signal $N_{IIx}$

~S24

Calculate amplitude $a_{IIax}$
and initial phase $\eta_{IIax}$
of noise signal $N_{IIax}$

~S29

Calculate amplitude $a_{IRx}$
and initial phase $\eta_{IRx}$
of optical noise $IR_x$

~S25

Calculate amplitude $a_{IRj}$
and initial phase $\eta_{IRj}$
of jig-derived noise signal $IR_j$

~S30

Output amplitude $a_{IRj}$
and initial phase $\eta_{IRj}$
of jig-derived noise signal $IR_j$

~S31

End

# FIG. 12

**EP 4 053 589 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009258006 A
- JP 2010032421 A
- JP 2014149171 A